# EUROPÄISCHE PATENTSCHRIFT

(11) **EP 1 943 707 B1**
(45) Veröffentlichungstag und Bekanntmachung des Hinweises auf die Patenterteilung: **06.01.2010**
(21) Anmeldenummer: 05798793.5
(22) Anmeldetag: 02.11.2005
(51) Int. Cl.: H02B 13/035

(54) **HOCHSPANNUNGSLEISTUNGSSCHALTER UND SCHALTERANORDNUNG**
HIGH-VOLTAGE CIRCUIT BREAKER AND BREAKER ARRANGEMENT
DISJONCTEUR DE COUPURE EN CHARGE HAUTE TENSION ET CONFIGURATION D'INTERRUPTEUR

(43) Veröffentlichungstag der Anmeldung: 16.07.2008
(73) Patentinhaber: ABB Technology AG, 8050 Zürich (CH)
(72) Erfinder: BRUCKERT, Michael, CH-8153 Rümlang (CH); FUECHSLE, Dieter, CH-5304 Endingen (CH); ZUERCHER, Martin, CH-8107 Buchs (CH); TREGLIA, Mara, CH-8600 Dübendorf (CH)
(74) Vertreter: ABB Patent Attorneys
(86) Internationale Anmeldenummer: PCT/CH2005/000641
(87) Internationale Veröffentlichungsnummer: WO 2007/051319

(56) Entgegenhaltungen:
- DE-C1- 19 641 391
- US-A- 3 258 524
- US-A1- 2002 012 225

## Beschreibung

### TECHNISCHES GEBIET

Die Erfindung bezieht sich auf das Gebiet der Hochspannungstechnik, insbesondere der Leistungsschalter in elektrischen Energieverteilnetzen. Sie geht aus von einem elektrischen Schaltgerät und einer Schaltgeräteanordnung gemäss Oberbegriff der unabhängigen Patentansprüche.

### STAND DER TECHNIK

Bei der Erfindung wird ausgegangen von dem Stand der Technik gemäss der DE 24 27 451. Dort wird ein gasisolierter Hybridschalter mit für Transportzwecke schwenkbaren Freiuftdurchführungen gezeigt. Die Durchführungen können am Mantel des Leistungsschalters an seitlich (horizontal) oder oben (vertikal) angeordneten Stromanschlussflanschen angebaut sein. Zusätzlich kann ein stirnseitiger Stromanschluss vorhanden sein. Bei diesem Leistungsschalter sind die beiden mantelseitigen Stromanschlüsse in einer gemeinsamen Ebene durch die Schalterachse angeordnet. Optional können im Schaltergehäuse Trenner vorhanden sein.

DE 29 29 054 A1 zeigt Mehrkammer-Leistungsschalter, die stirnseitige Stromanschlüsse für eine vertikal weggeführte Freiluftdurchführung und an eine horizontal weggeführte gasisolierte Stromschiene aufweisen. An den Abgängen sind über Zwischenbausteine Lineartrenner angeflanscht.

In der DE 100 13 232 A1 sind zwei mehrphasig gekapselte Leistungsschalter liegend angeordnet und mit mantelseitigen, am Tank obenliegenden Stromanschlussflanschen versehen, wobei die Stromanschlüsse bzw. ihre Mittenachsen wieder in einer gemeinsamen vertikalen Längsebene durch die Schalterachse liegen und vertikal nach oben weggeführt sind. An den GIS-seitigen Stromanschluss ist ein 90°-Winkelbaustein mit Trenner-Erderfunktion aufgesetzt. Durch den rechtwinkligen Trenner wird der Stromanschluss in die Horizontale umgelenkt und kann dadurch mit der horizontal liegenden GIS-Sammelschiene verbunden werden.

In der DE 100 11 888 A1 wird für eine dreiphasige Hochspannungsschaltanlage eine H-Schaltung aus fünf Gruppen von jeweils drei parallel angeordneten Leistungsschaltern gezeigt. Die Leistungsschalter sind horizonzal liegend angeordnet und weisen vertikal nach oben herausgeführte Stromanschlüsse oder Stromanschlussflansche auf, die freiluftseitig nach oben weggeführt sind und GIS-seitig über Winkeltrenner in die Horizontale umgelenkt werden. Die Leistungsschalter können GIS-seitig auch mit einem stirnseitigen Stromanschluss versehen sein, wobei alle GIS-seitigen Baugruppen der Anlage in einer gemeinsamen horizontalen Ebene angeordnet sind.

In der DE 100 32 656 A1 wird ein horizontal liegender "Dead Tank Breaker" mit zwei mantelseitigen Anschlussstutzen gezeigt. Die Anschlussstutzen sind in der vertikalen Längsebene durch die Schalterachse angeordnet und ihre Flanschebene verläuft horizontal. Zwei Freiluftdurchführungen werden über bogenförmige Fussteile so auf die Anschlussflansche aufgesetzt, dass die Durchführungen in der vertikalen Längsebene nach oben und V-förmig voneinander weggeführt sind. Auch können die Anschlussstutzen einheitlich horizontal ausgerichtet sein, so dass ihre Flanschebene vertikal verläuft. In diesem Fall.ist der erste Anschlussstutzen mit einer gasisolierte Schaltanlage (GIS) und der zweite Anschlussstutzen über eine Freiluftdurchführung mit einer Freileitung oder einem Transformator verbunden. Die Freiluftdurchführung ist dabei mit Hilfe des bogenförmigen Fussteils aus der Horizontalen herausgeführt und in einer vertikalen, senkrecht zur Schalterachse liegenden Ebene (Querebene) schräg nach oben weggeführt.

In der EP 0 744 758 A2 ist ein Leistungsschalter mit mantelseitigen, leicht divergent nach oben geführten Stromanschlüssen für Kabelabgänge gezeigt. In den Kabelabgängen sind Abgangstrennschalter vorhanden. Die zwei zu einer Phase gehörigen Stromanschlüsse bzw. ihre Mittenachsen sind am Leistungsschaltergehäuse jeweils in einer gemeinsamen Ebene durch die Schalterachse (Längsebene) angeordnet. Eine dreiphasige Schalteinrichtung ist realisiert, indem drei Leistungsschalter längs nebeneinander angeordnet und einphasig gekapselt oder dreiphasig gekapselt sind. In beiden Fällen sind die Ebenen der Stromanschlüsse bzw. Kabelabgänge für die aussenliegenden Phasen um die Schalterachsen um ca. 45° von der vertikal orientierten Ebene der Stromanschlüsse der mittleren Phase nach aussen verkippt.

In der DE 103 25 681 B3 wird ein gasisoliertes Hybridschaltgerät angegeben, bei dem die Längsachse des Leistungsschalters abweichend von der Horizontalen und Vertikalen unter einem Winkel von 45° angeordnet ist. Ein erster Stromanschlussflansch ist stirnseitig und ein zweiter und dritter Stromanschlussflansch sind mantelseitig am Leistungsschalter vorhanden. Sämtliche Stromanschlüsse bzw. ihre Mittelachsen sind in einer gemeinsamen vertikalen Ebene durch die Schalterachse (Längsebene) angeordnet. Hierbei ist der zweite, mantelseitige Stromanschluss über einen knieförmigen Flansch oder über ein knieförmiges Verbindungsstück in die Vertikale nach oben umgelenkt und der dritte, mantelseitige Stromanschluss bezüglich der Längsachse des Leistungsschalters radial weggeführt. Dadurch können an die Stromanschlüsse Freiluftdurchführungen symmetrisch aufgefächert nach oben weggeführt werden. In den Freiluftdurchführungen sind Lineartrenner vorhanden.

In der DE 103 25 684 A1 wird ein verwandtes gasisoliertes Hybridschaltgerät angegeben, bei dem wiederum die Schalterlängsachse schräg nach oben gerichtet ist und ein erster stirnseitiger und ein zweiter mantelseitiger Stromanschlussflansch für Freiluftdurchführungen vorhanden sind.

In der EP 1 249 910 A1 ist ein horizontal angeordneter, dreiphasig oder einphasig gekapselter Hochspannungsleistungsschalter gezeigt, der zwei mantelseitige, vertikal nach oben gerichtete Stromanschlüsse zu einer GIS-Doppelsammelschiene und zwei stirnseitige Stromanschlüsse zum Abgang von Kabeln, Freileitungen oder Transformatoren aufweist.

In der EP 0 735 637 B1 wird ein horizontal angeordneter, dreiphasig oder einphasig gekapselter Leistungsschalter mit integriertem Dreistellungstrenner offenbart. Die beiden Trennerabgänge sind mantelseitig in einer Ebene senkrecht zur Schalterlängsachse (Querebene) V-förmig nach oben weggeführt. Weitere Komponenten und auch Abgangstrenner sind im Schaltergehäuse angeordnet.

Bei den genannten Leistungsschaltern mit gasisoliertem Gehäuse ("Dead Tank Breaker", Freiluft-GIS Hybridschalter, GIS-Schalter) sind Freiluftdurchführungen grundsätzlich nach oben wegzuführen. Im genannten Stand der Technik geschieht dies entweder direkt über mantelseitig obenliegende, im wesentlichen vertikal nach oben gerichtete Stromanschlüsse oder indirekt über stirnseitig horizontale oder mantelseitig horizontale Stromanschlüsse, die über zusätzliche Umlenkbausteine aus der Horizontalen heraus um 90° oder gegebenenfalls 45° nach oben umgelenkt werden.

In der EP 1 569 254 wird ein gekapselter Kombitrenner mit wahlweiser Trenner- und/oder Erdungsfunktion offenbart.

In der DE 196 41 391 C1 wird ein elektrisches Schaltgerät gemäß dem Oberbegriff des Auspruchs 1 offenbart.

### DARSTELLUNG DER ERFINDUNG

Aufgabe der vorliegenden Erfindung ist es, ein gasisoliertes Schaltgerät und eine Schalteranordnung mit einem solchen Schaltgerät zu schaffen, das in der Grösse kompakter und im Aufbau vereinfacht ist und flexibel an verschiedene Schaltanordnungen anpassbar ist. Diese Aufgabe wird erfindungsgemäss durch die Merkmale der unabhängigen Ansprüche gelöst.

Die Erfindung betrifft ein elektrischen Schaltgerät für ein elektrisches Energieversorgungsnetz, insbesondere Hochspannungsschalter, umfassend einen Leistungsschalter, der in einem entlang einer Längsachse erstreckten Gehäuse angeordnet ist, wobei das Gehäuse an seiner Mantelfläche mindestens einen mantelseitigen Stromanschluss aufweist, der zum Anschluss eines Abgangs dient und eine Mittenachse hat, die in Betriebsstellung des Schaltgeräts eine horizontale Richtungkomponente aufweist, d. h. nicht vertikal ist, wobei zwischen dem mantelseitigen Stromanschluss und dem Abgang ein gekapselter Winkeltrenner montiert ist, dessen stromanschlussseitige. Eingangsachse parallel zur Mittenachse und dessen abgangsseitige Ausgangsachse parallel zu einer Längsachse des Abgangs liegt, und wobei ferner durch die Eingangsachse und Ausgangsachse eine Trennerebene definiert ist und zwischen der Eingangsachse und der Ausgangsachse ein Trennerwinkel α eingeschlossen ist, durch den der Stromanschluss in Betriebsstellung des Schaltgeräts in der Trennerebene umgelenkt ist. Der Stromanschluss kann durch einen Stutzen am Gehäuse und vorzugsweise in Form eines Flansches am Gehäuse implementiert sein. Mit Trenner sei hier jegliches Schaltgerät mitumfasst, durch das der Abgang abgetrennt und/oder geerdet werden kann. Durch die Erfindung wird also an einem gekapselten Leistungsschalter über einen mantelseitigen, nichtvertikalen Ausgang am Gehäusemantel äusserst raumsparend ein abtrennbarer und/oder erdbarer Abgang geschaffen.

Das Ausführungsbeispiel gemäss Anspruch 2 hat den Vorteil, dass bisher benötigte gekapselte Zwischenbausteine, wie z. B. Kugelumlenkstücke, Winkelstücke oder dergleichen, weggelassen werden können und dennoch eine Trennerfunktion und/oder Erderfunktion am Abgang realisiert ist.

Die Ausführungsbeispiele gemäss Ansprüchen 3-5 haben den Vorteil, dass durch den Winkeltrenner zugleich vorteilhafte Abgangswinkel für Freiluftdurchführungen und Kabelabgänge realisierbar sind.

Die Ausführungsbeispiele gemäss Anspruch 6-8 haben den Vorteil, dass durch Abstimmen von Positions- und Trennerwinkel für jede mantelseitige Position des Stromanschlusses die Längsachse des Abgangs mit hinreichender Steilheit aus der Horizontalen bei Freiluftdurchführungen nach oben und bei Kabelabgängen nach unten weggeführt ist.

Das Ausführungsbeispiel gemäss Anspruch 9 hat den Vorteil, dass durch den Verdrehwinkel β ein zusätzlicher Freiheitsgrad geschaffen wird, durch den auch an einem mantelseitigen Abgang am Leistungsschaltergehäuse eine Freiluftdurchführung mit grosser Flexibilität an Freileitungen und dergleichen oder ein Kabelabgang in beliebiger Abgangsrichtung anschliessbar ist.

Die Ansprüche 10-13 betreffen vorteilhafte Ausgestaltungen mit mehreren am Leistungsschalter angeflanschten Freiluft- und/oder Kabelabgängen.

Besonders konstengünstig wird gemäss Anspruch 16-18 ein Standard-Kombitrenner mit Trenner- und/oder Erderfunktion als Winkeltrenner, optional in T-Form, am Freiluft- oder Kabelabgang eingesetzt.

Gegenstand der Erfindung ist auch eine Schalteranordnung, insbesondere eine 1½ Schalter-Anordnung, mit einem Schaltgerät wie oben dargestellt.

Weitere Ausführungen, Vorteile und Anwendungen der Erfindung ergeben sich aus abhängigen Ansprüchen, aus den Anspruchskombinationen sowie aus der nun folgenden Beschreibung und den Figuren.

### KURZE BESCHREIBUNG DER ZEICHNUNGEN

Es zeigen schematisch
- Fig. 1a, 1b: eine erste Ausführungsform eines Schaltgeräts mit erfindungsgemässer seitlicher Anflanschung einer Freiluftdurchführung in Seitenansicht und Frontansicht;
- Fig. 2a-2c: eine zweite. Ausführungsform des Schaltgeräts mit seitlicher Anflanschung zweier Abgänge (Freiluftdurchführung und/oder Kabel) in Seitenansicht und Draufsicht;
- Fig. 3: eine dritte Ausführungsform des Schaltgeräts mit beidseitiger Anflanschung zweier Abgänge;
- Fig. 4a, 4b: eine vierte Ausführungsform des Schaltgeräts mit beidseitiger, zum Teil gegenüberliegender seitlicher Anflanschung dreier Abgänge in Seitenansicht und Draufsicht;
- Fig. 5a, 5b: eine vereinfachte 1½ Schalteranordnung in Draufsicht und Seitenansicht;
- Fig. 6, 7: 1½ Schalteranordnungen mit mantelseitigen Winkeltrennerverbindungen in Draufsicht; und
- Fig. 8: ein bevorzugter Anflanschbaustein in Form eines gekapselten Kombi-Winkeltrenners/erders.

In den Figuren werden für gleiche Teile die gleichen Bezugszeichen verwendet und gegebenenfalls sind die Bezugszeichen für sich wiederholende Teile weggelassen.

### WEGE ZUR AUSFÜHRUNG DER ERFINDUNG

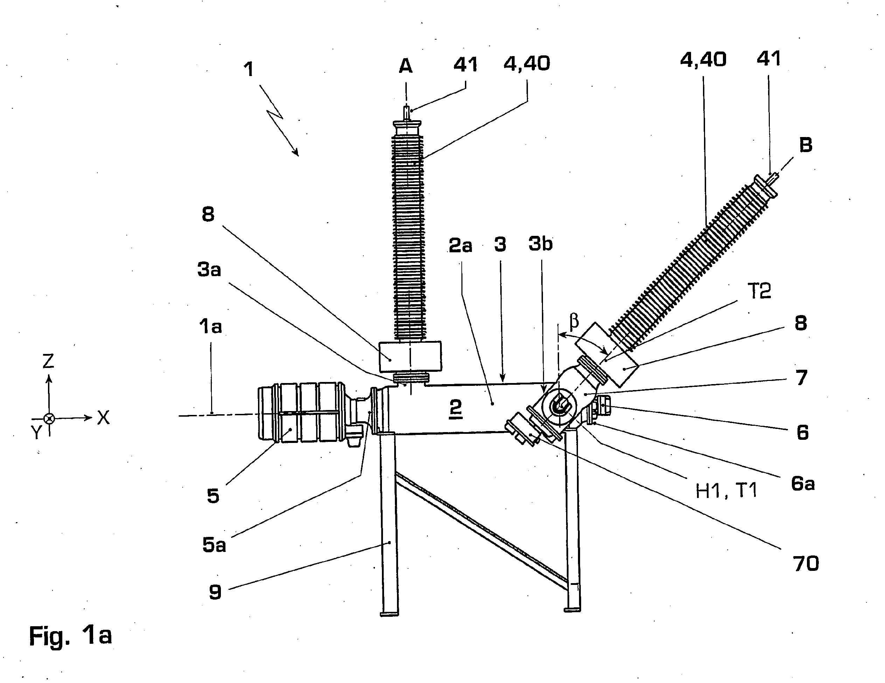

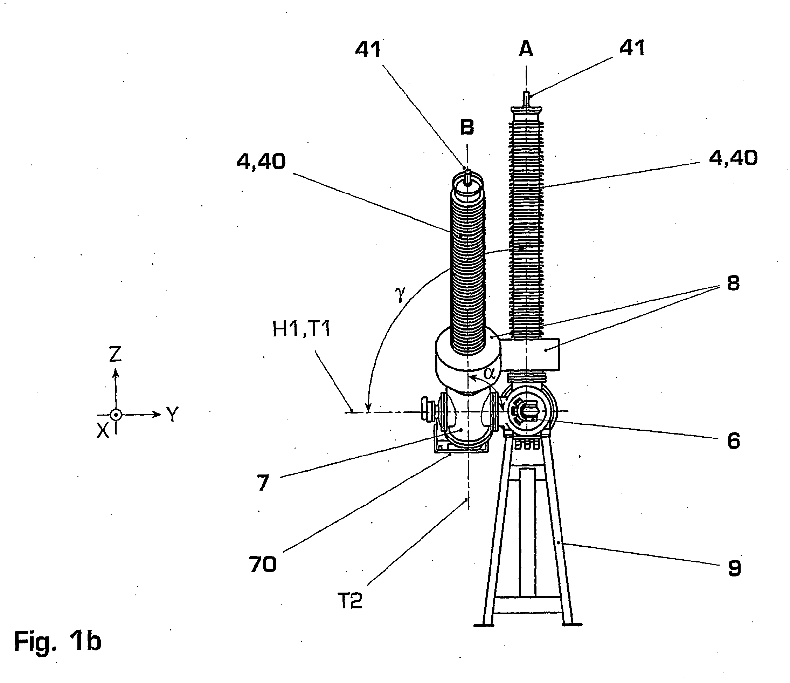

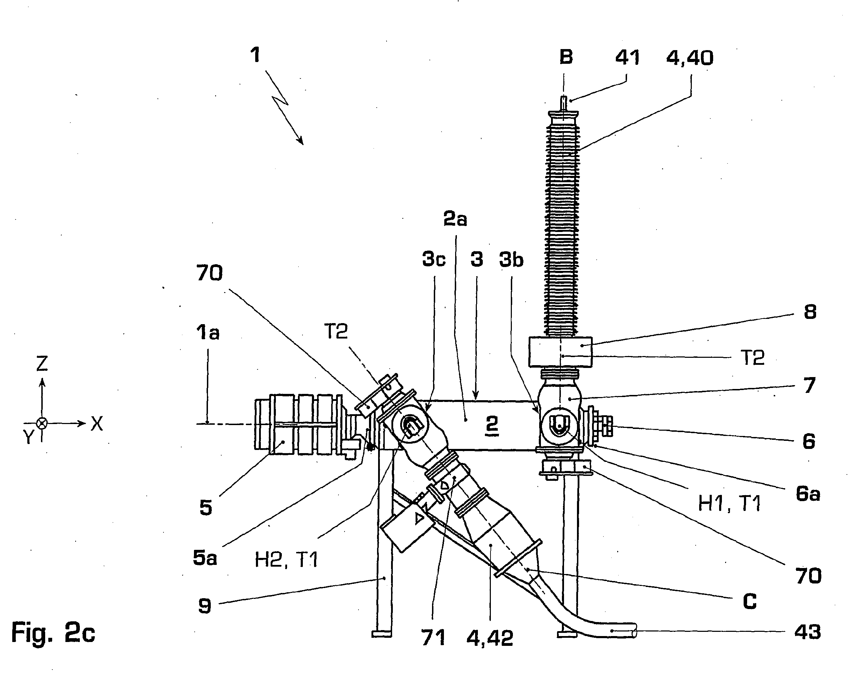

Fig. 1a, 1b zeigen vereinfacht ein erstes Ausführungs-beispiel eines Schaltgeräts 1, das einen Leistungsschalter 2 in einem entlang einer zentralen Achse 1a, x erstreckten Gehäuse 3 beherbergt. Das Gehäuse 3 weist an seiner Mantelfläche 2a mindestens einen mantelseitigen Stromanschluss 3b auf, der zum Anschluss einer Freiluftdurchführung 4, 40 dient. Der Freiluftabgang 4, 40 führt typischerweise zu einer Freiluftleitung oder zu einem Transformator. Generell kann statt Freiluftabgang 4, 40 immer auch ein Kabelabgang 4, 42 vorhanden sein (Fig. 2c).

Der Stromanschluss 3b hat eine von dem Leistungsschalter 2 wegführende Mittenachse H1, die in einer Betriebsstellung des Schaltgeräts 1 eine horizontale (in der x, y - Ebene liegende) Raumkomponente aufweist. Desweiteren ist ein gekapselter Winkeltrenner 7 vorhanden, dessen stromanschlussseitige Eingangsachse T1 parallel zur Mittenachse H1 und dessen durchführungsseitige Ausgangsachse T2 parallel zur Längsachse B der Freiluftdurchführung 4 liegt. Mit Winkeltrenner 7 ist hier ein beliebiger Winkelbaustein mit Trenner- und/oder Erderfunktion bezeichnet (Winkel-Kombitrenner). Durch die Eingangsachse T1 und die Ausgangsachse T2 ist eine Trennerebene T12 definiert, und zwischen der Eingangsachse T1 und der Ausgangsachse T2 ist ein Trennerwinkel α eingeschlossen. Erfindungsgemäss ist der Winkeltrenner 7 so zwischen dem mantelseitigen Stromanschluss 3b und dem Abgang 4 montiert, dass der Stromanschluss 3b in Betriebsstellung des Schaltgeräts 1 in der Trennerebene T12 umgelenkt ist. Auf diese Weise wird mit Hilfe des Winkeltrenners ein weites Winkelspektrum zur Wegführung von Abgängen 4 an Freiluft oder in Kabeln geschaffen. Im folgenden werden hierzu Ausführungsbeispiele angegeben.

In Fig. 1a, 1b sind ferner dargestellt: ein Hochspannungsterminal 40 am Ende der Freiluftdurchführung 4; linkerhand ein stirnseitiger Anschlussflansch 5a zum Anschluss des Schalterantriebs 5 für den nicht näher dargestellten Leistungsschalter 2; rechterhand ein stirnseitiger Anschlussflansch 6a mit einer Druckentlastungsklappe 6. Am Winkeltrenner 7 ist ein Trenner/Erder-Antrieb 70 angebaut. Desweiteren können am Schaltgerät 1 zusätzliche Gehäusebausteine vorhanden sein, z. B. Stromwandler 8 oder nicht dargestellte Spannungswandler, Umlenkbausteine, Anschlussbausteine, Trenner-Erder-Bausteine, o. ä..

Das Schaltgerät 1 ist auf einem Traggestell 9, einem Betonsockel o. ä. montiert. Das Schaltgerät 1 kann ein Dead Tank Breaker 1, ein AIS/GIS-Hybridschalter 1, oder ein GIS-Schalter mit einem Freiluftabgang oder Kabelabgang sein. Das Schaltgerät 1 kann einen beliebigen Leistungsschalter 2 beherbergen, z. B. einen Hochspannungsleistungsschalter 1 oder gegebenenfalls einen Hochstromschalter o. ä.. Typischerweise, jedoch nicht notwendigerweise ist die Längsachse 1a, x des Gehäuses 3 horizontal liegend ausgerichtet. Das Querschnittsprofil des Gehäuses 3 kann ganz oder teilweise rund, oval, rechteckig oder polygonal geformt sein.

Mit Vorteil ist der Winkeltrenner 7 zur erfindungsgemäss seitlichen Anflanschung des Abgangs 4 unmittelbar und ohne Verwendung von Zwischenbausteinen eingangsseitig an den Stromanschluss 3b und ausgangsseitig an den Abgang 4 montiert. Dadurch wird unmittelbar und ohne Verwendung von Zwischenbausteinen eine gekapselte Verbindung zwischen dem Stromanschluss 3b und dem Abgang 4 geschaffen.

Mit Vorteil ist der Stromanschluss 3b, 3c, 3d durch den Trennerwinkel α in der Trennerebene T12 zur Vertikalen hin umgelenkt. Insbesondere ist die für einen Freiluftabgang 4, 40 notwendige Orientierung der Freiluftdurchführungs-Längsachse B himmelwärts oder für einen Kabelabgang 4, 42 erdwärts oder möglicherweise auch himmelwärts realisiert. Es ist in einer mehrstöckigen Anlage auch möglich, dass durch Umlenkung zur Vertikalen hin für eine Freiluftdurchführung ein Abgang nach unten geschaffen wird.

In einem weiteren Ausführungsbeispiel schliesst die Mittenachse H1 mit der Vertikalen einen Positionswinkel γ ein, wobei der Positionswinkel (γ) im Bereich 301<γ<150°, bevorzugt 60°<γ<120° und besonders bevorzugt 80°<γ<100° liegt und insbesondere γ=90° beträgt. Desweiteren kann der Trennerwinkel α im Bereich 30°<α<150°, bevorzugt 60°<α<120° und besonders bevorzugt 80°<α<100° liegen und insbesondere α=90° betragen. Insbesondere sind der Trennerwinkel α und der Positionswinkel γ so aufeinander abgestimmt, dass der Abgang 4 unter maximal 60°, bevorzugt maximal 45°, besonders bevorzugt maximal 30° zur Vertikalen nach oben oder nach unten weggeführt ist.

Mit Vorteil ist im Falle eines Abgangs mit Freiluftdurchführung 4, 40 eine (numerische) Summe des Trennerwinkels α und des Positionswinkels γ im Bereich 130°<α+γ<230°, bevorzugt 140°<α+γ<220°, besonders bevorzugt 150°<α+γ<210° und insbesondere gleich α+γ=180° gewählt. Dadurch wird eine vorteilhafte Orientierung der Freiluftdurchführungs-Längsachse B himmelwärts nach oben und zugleich am Boden im Schalterbereich eine gute Zugänglichkeit ohne Hochspannungsgefährdung für Bedienpersonal erreicht.

Desweiteren soll im Falle eines Kabelabbgangs 4, 42 eine Summe des Trennerwinkels α und des Positionswinkels γ im Bereich -50°<α-γ<50°, bevorzugt -40°<α-γ<40°, besonders bevorzugt -30°<α-γ<30° liegen und insbesondere α-γ=0° betragen, um das Kabel 43 (Fig. 2c) erdwärts nach unten wegzuführen.

Zusätzlich kann der Winkeltrenner 7 in einer verdrehten Orientierung am Stromanschluss 3b fest montiert sein, wobei der Verdrehwinkel β zwischen einer vertikalen Bezugsebene durch die Eingangsachse T1 und der Trennerebene T12 vorgebbar ist. Auf diese Weise kann die Freiluftdurchführung 4, 40 um den Verkippwinkel β abweichend von der Vertikalen in der verkippten Trennerebene T12 nach oben geführt weggeführt sein. Insbesondere kann der Verdrehwinkel β im Bereich 0°<|β|<70°, bevorzugt 0°<|β|<50°, besonders bevorzugt 0°<|β|<30° liegen. Der Verdrehwinkel β kann durch den Winkelabstand an einem Lochkreis-Montageflansch am Stromanschluss 3b und am Trennereingangsflansch bestimmt sein. Im Falle eines Kabelabgangs 4, 42 nach unten soll der Verdrehwinkel β im Bereich 110°<|β|<180°, bevorzugt 130°<|β|<180°, besonders bevorzugt 150°<|β|<180° liegen.

Bevorzugt und wie in den Figuren dargestellt liegt die Mittenachse H1 oder H2 in der Horizontalen, und der Trennerwinkel α liegt im Bereich 80°<α<100° und beträgt insbesondere α=90°. Dadurch kann der Abgang 4, nämlich die Freiluftdurchführung 4, 40; B, C, D oder der Kabelabgang 4, 42; C, in der Trennerebene T12 nach oben (-70°<β<70°) oder nach unten (110°<|β|<180°) geführt sein, wobei noch die Verkippungen um den Verdrehwinkel β hinzukommen können, und insbesondere kann der Abgang 4 senkrecht nach oben (β=0°) oder senkrecht nach unten (β=±180°) geführt sein.

In Fig. 1a, 1b ist zusätzlich ein mantelseitiger, vertikaler Anschluss 3a für eine weitere Freiluftdurchführung 4 mit einer Längsachse A oder für ein Zusatzgerät vorhanden. Alternativ oder ergänzend kann auch zusätzlich mindestens ein stirnseitiger Anschluss für Freiluftdurchführungen oder für Zusatzgeräte vorhanden sein. Wie in Fig. 2c beispielhaft gezeigt kann auch zwischen dem Winkeltrenner 7 und dem Abgang 4, 42 ein Schnellerder 71 vorhanden sein.

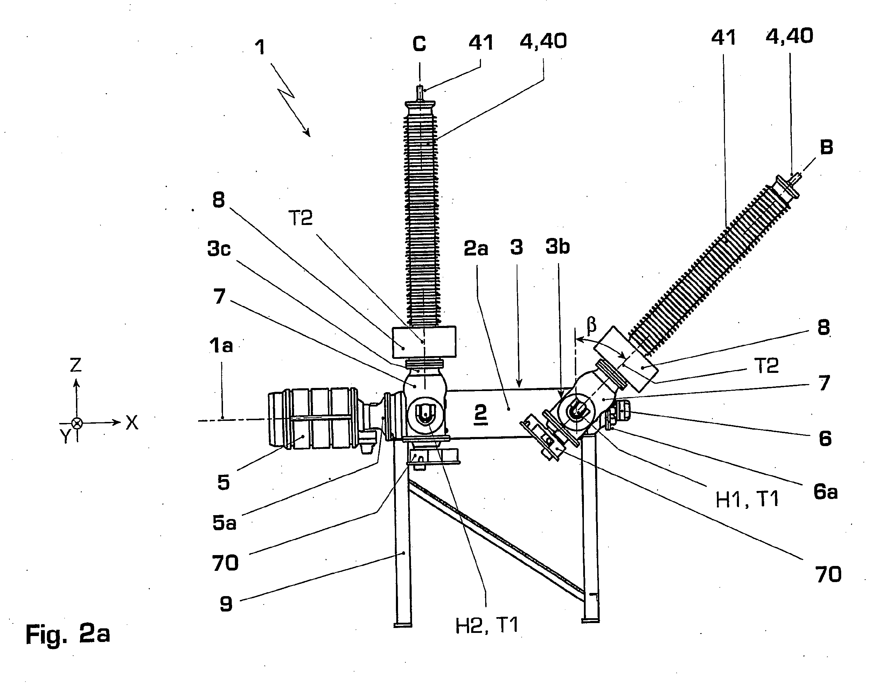

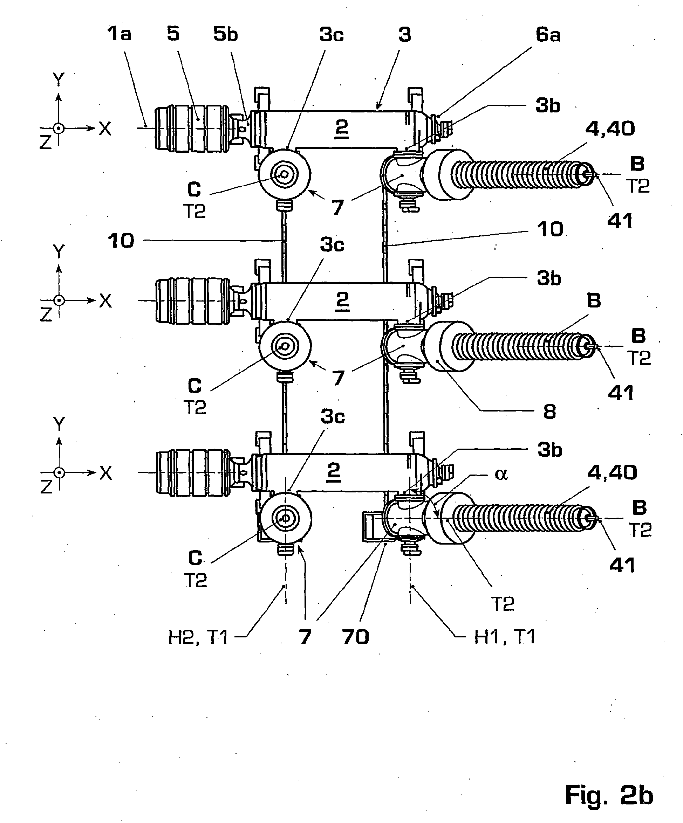

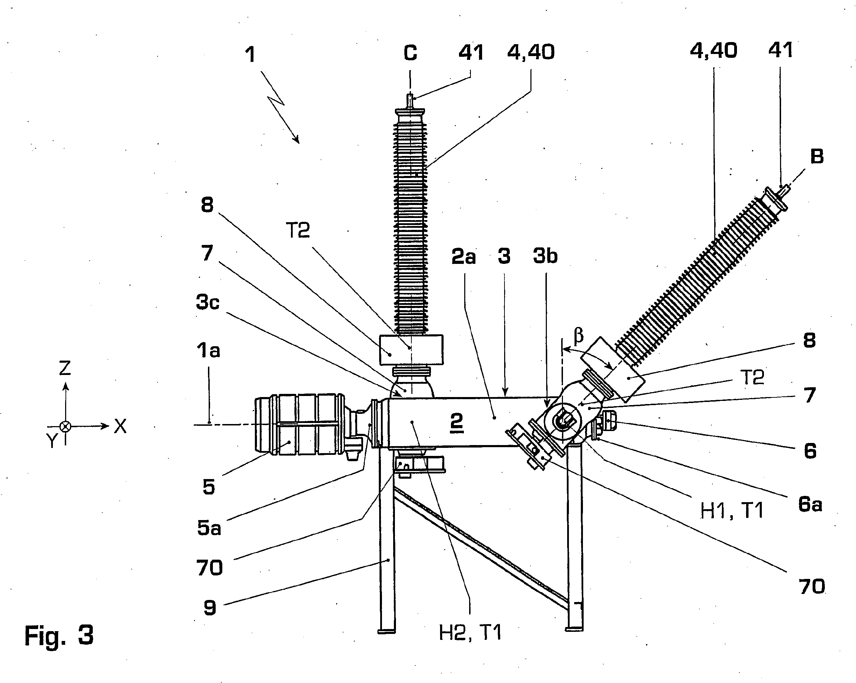

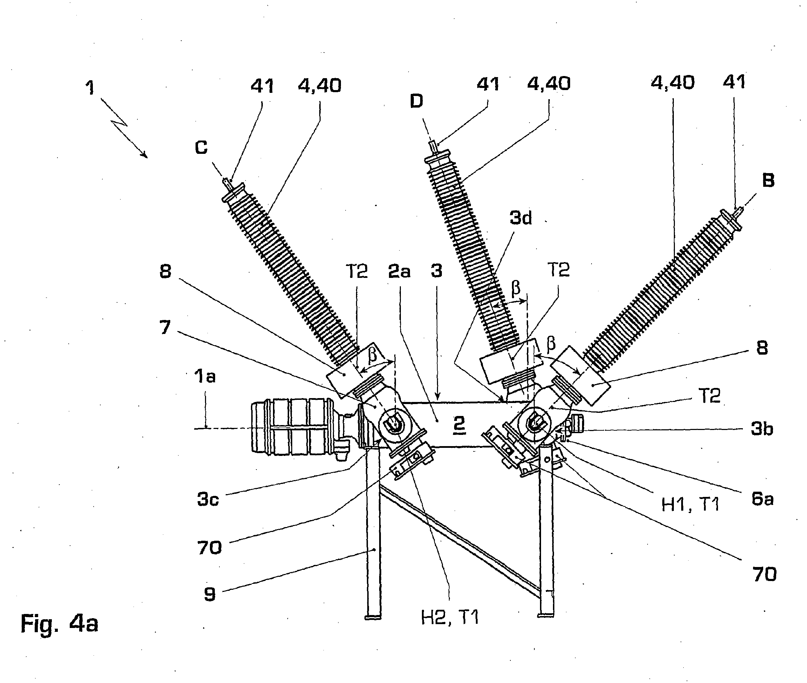

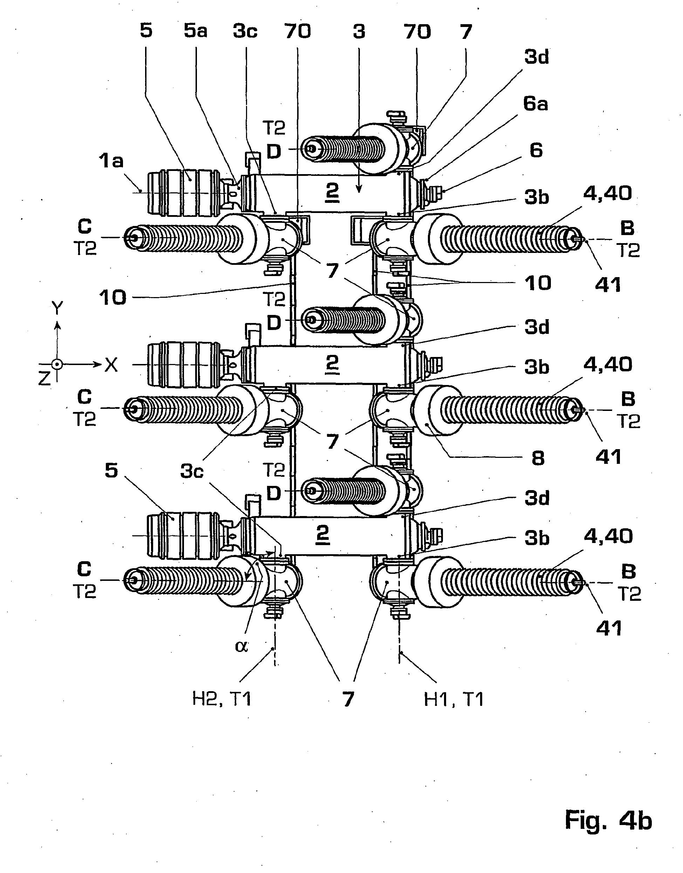

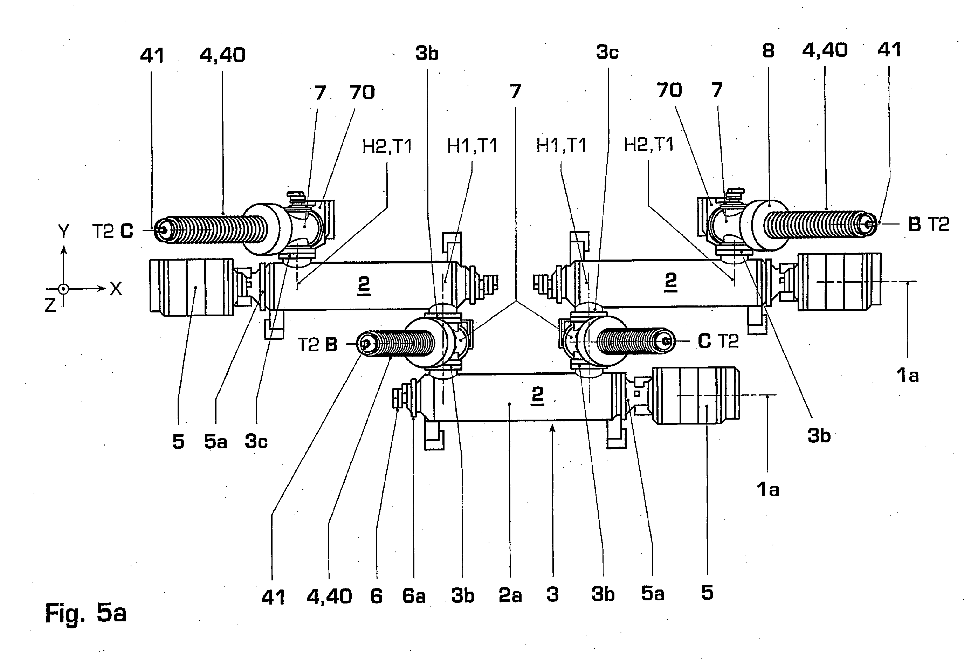

Mit Vorteil sind, wie in Fig. 2a, 2b, 2c, 3, 4a, 4b und Fig. 5a, 5b, 6 dargestellt, mehrere mantelseitige, nicht vertikale Stromanschlüsse 3b, 3c, 3d vorhanden, die jeweils über Winkeltrenner 7 unmittelbar mit entlang den Längsachsen B, C, D erstreckten Freiluftdurchführungen 4, 40 oder Kabelabgängen 42 verbunden sind. Die Stromanschlüsse 3b, 3c, 3d können entlang der Längsachse 1a, x zueinander versetzt und/oder bezüglich einer vertikalen Längsebene durch das Gehäuse 3 des Schaltgeräts 1 auf einander gegenüberliegenden Seiten und insbesondere einander gegenüberliegend (Fig. 3, 4a, 4b, 5a, 5b, 6) angeordnet sein. Für diese mantelseitig seitlich an Stromanschlüsse 3a, 3c, 3d angeschlossenen Abgänge 4; 40, 42; B, C, D gilt ebenfalls alles oben gesagte. Insbesondere kann der Verkippwinkel β für die Durchführungen 4; B, C, D unterschiedlich und bevorzugt divergierend, z. B. β=0° und β<45° (Fig. 2a, 2b) oder jeweils z. B. |β|<45° mit entgegengesetztem Drehsinn bzw. Vorzeichen (Fig. 4a, 4b oder auch Fig. 5a, 5b, 6, 7), gewählt sein.

Wie in Fig. 2b und Fig. 4b in Draufsicht gezeigt, kann das Schaltgerät 1 einphasig gekapselt sein, und drei Phasen derartiger Schaltgeräte 1 können parallel nebeneinander angeordnet sein. Dabei sind die Winkeltrenner 7 vorzugsweise über eine gemeinsame Antriebsstange 10 von einem gemeinsamen Trennerantrieb 70 angetrieben. Dieser an sich bekannte gemeinsame Trennerantrieb 10, 70 ist also auch in der Erfindung, d. h. bei erfindungsgemäss seitlich angeflanschten und gegebenenfalls verkippten Winkeltrennern 7 für Freiluftdurchführungen 4, 40; B, C, D, und für Kabelabgänge 4, 42; C realisierbar.

Gegenstand der Erfindung ist auch eine Schalteranordnung 1b mit mindestens einem elektrischen Schaltgerät 1 gemäss Anspruch 1. Dabei ist am mindestens einen Schaltgerät 1 erfindungsgemäss zwischen dem mantelseitigen Stromanschluss 3b, 3c, 3d und dem Abgang 4; 40, 42 ein gekapselter Winkeltrenner 7 montiert, dessen stromanschlussseitige Eingangsachse T1 parallel zur Mittenachse H1, H2 und dessen abgangsseitige Ausgangsachse T2 parallel zu einer Längsachse B, C, D des Abgangs 4; 40, 42 liegt, wobei durch die Eingangsachse T1 und die Ausgangsachse T2 eine Trennerebene T12 definiert ist und zwischen der Eingangsachse T1 und der Ausgangsachse T2 ein Trennerwinkel α eingeschlossen ist, durch den der Stromanschluss 3b, 3c, 3d in Betriebsstellung des Schaltgeräts 1 in der Trennerebene T12 umgelenkt ist.

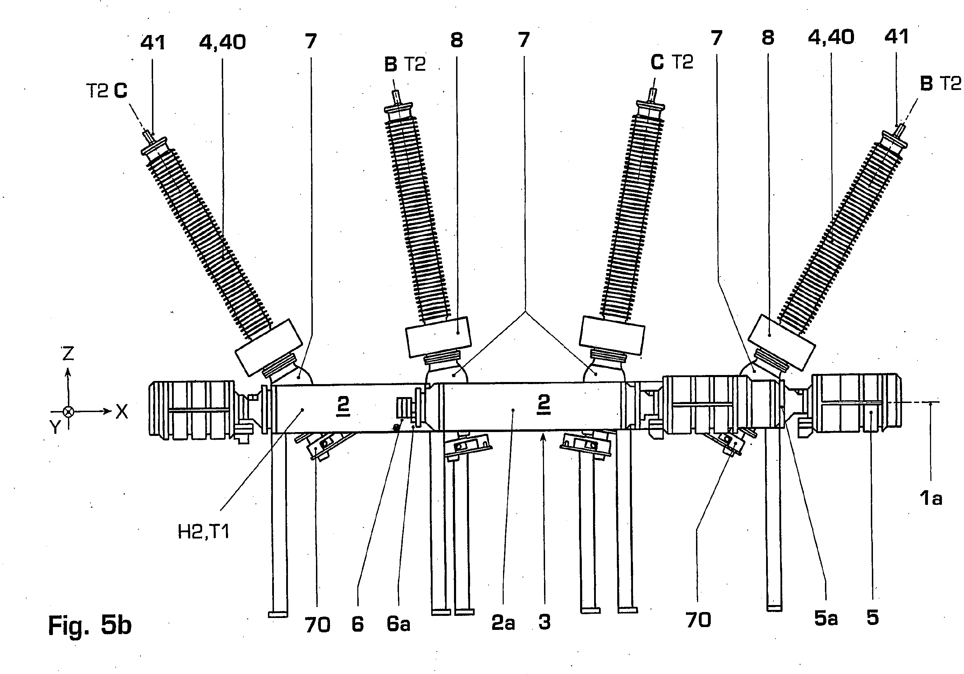

Die Schalteranordnung 1b kann eine Einfachsammelschienenanordnung (siehe hierfür das Schaltgerät 1 gemäß Fig.1-3), Doppelsammelschienenanordnung (siehe hierfür das Schaltgerät 1 gemäss Fig. 4), 1½-Schalter-Anordnung 1b (Fig. 5-7), eine H-Schaltung o. ä. sein.

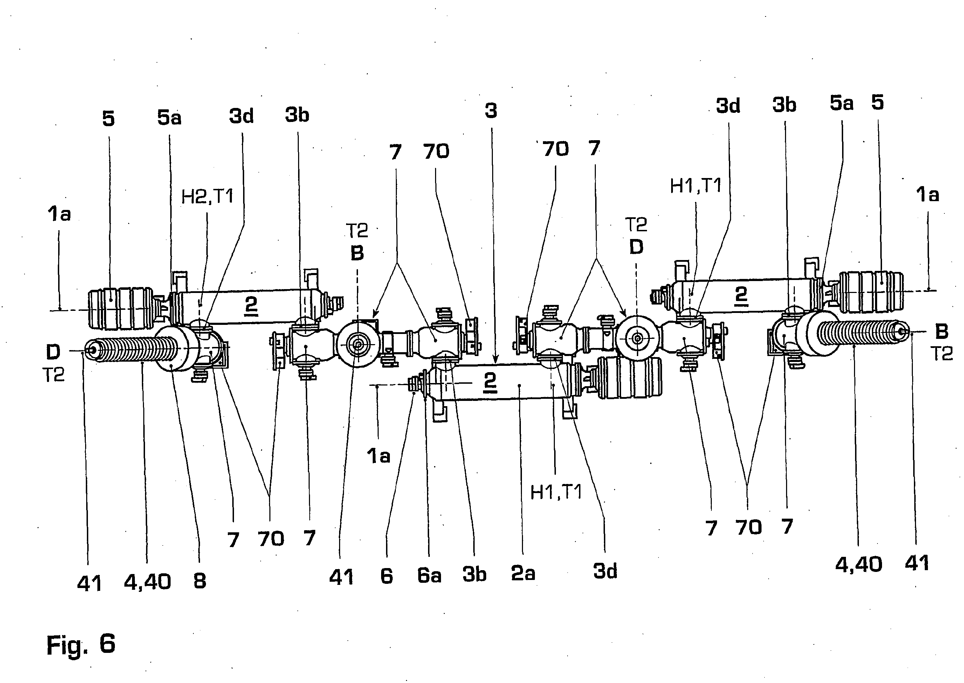

Bevorzugt und wie in Fig. 5a, 5b, 6 gezeigt ist ein Winkeltrenner 7 vorhanden, durch den zwei Leistungsschalter 2 mantelseitig miteinander verbunden sind. Über den Winkeltrenner 7 ist ein Abgang 4, 40, 42 erfindungsgemäss abgewinkelt angeflanscht. Dabei hat der Winkeltrenner 7 eine T-Form und weist entlang der Eingangsachse T1 eine erste Trenneröffnung 12, gegenüberliegend eine dritte Trenneröffnung 14 sowie entlang der Ausgangsachse T2 eine zweite Trenneröffnung 13 auf. Die erste und dritte Trenneröffnung 12, 14 dienen zum Anschluss der beiden Leistungsschalter 2. Die zweite Trenneröffnung 13 dient für den abtrennbaren Abgang 4.

Beispielsweise sind in einer 1½-Schalter-Anordnung 1b drei Schaltgeräte horizontal und parallel zueinander angeordnet und Über Winkeltrenner 7 miteinander verbunden.

Gemäss Fig. 5a, 5b kann das mittlere Schaltgerät 1 an zwei mantelseitigen, horizontalen, zueinander axial versetzten Stromanschlüssen 3b, 3d über die Winkeltrenner 7 mit den beiden anderen Schaltgeräten 1 verbunden sein, wobei die Winkeltrenner 7 eine rechtwinklige T-Form haben und entlang ihrer Eingangsachse T1 mit den anderen Schaltgeräten 1 verbunden sind und entlang ihrer Ausgangsachse T2 jeweils mit einem Abgang 4; 40, 42, insbesondere einer Freiluftdurchführung 4, 40 nach oben oder mit einem Kabelabgang 4, 42 nach unten, verbunden sind. Mindestens einer der Winkeltrenner 7 kann unmittelbar und ohne Verwendung von Zwischenbausteinen entlang seiner Eingangsachse T1 mit den anderen Schaltgeräten 1 und entlang seiner Ausgangsachse T2 mit dem Abgang 4; 40, 42 verbunden sein. Gemäss Fig. 6 kann auch mindestens einer der Winkeltrenner 7 beidseitig entlang seiner Eingangsachse T1 über je einen weiteren Winkeltrenner 7 mit den anderen Schaltgeräten 1 verbunden sein.

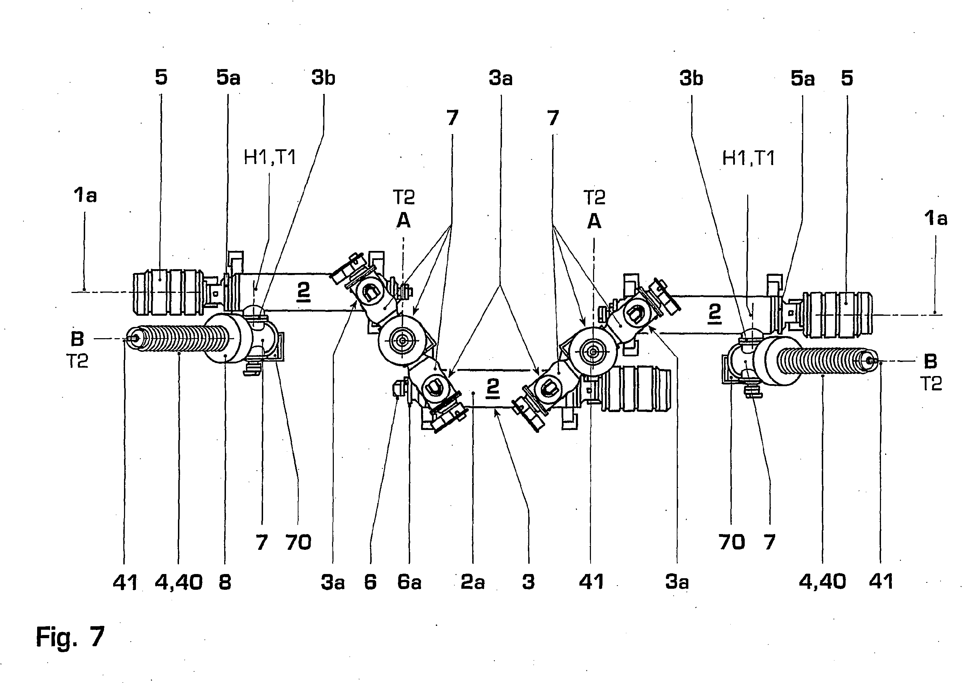

Gemäss Fig. 7 kann auch das mittlere Schaltgerät 1 an zwei mantelseitigen, vertikalen, zueinander axial versetzten Stromanschlüssen 3a über die Winkeltrenner 7 mit den beiden anderen Schaltgeräten 1 verbunden sein, wobei die Winkeltrenner 7 wiederum eine rechtwinklige T-Form haben und entlang ihrer Eingangsachse T1 über je einen weiteren Winkeltrenner 7 mit den anderen Schaltgeräten 1 verbunden sind und entlang ihrer Ausgangsachse T2 jeweils mit einem Abgang 4; 40, 42 nach oben oder nach unten verbunden sind.

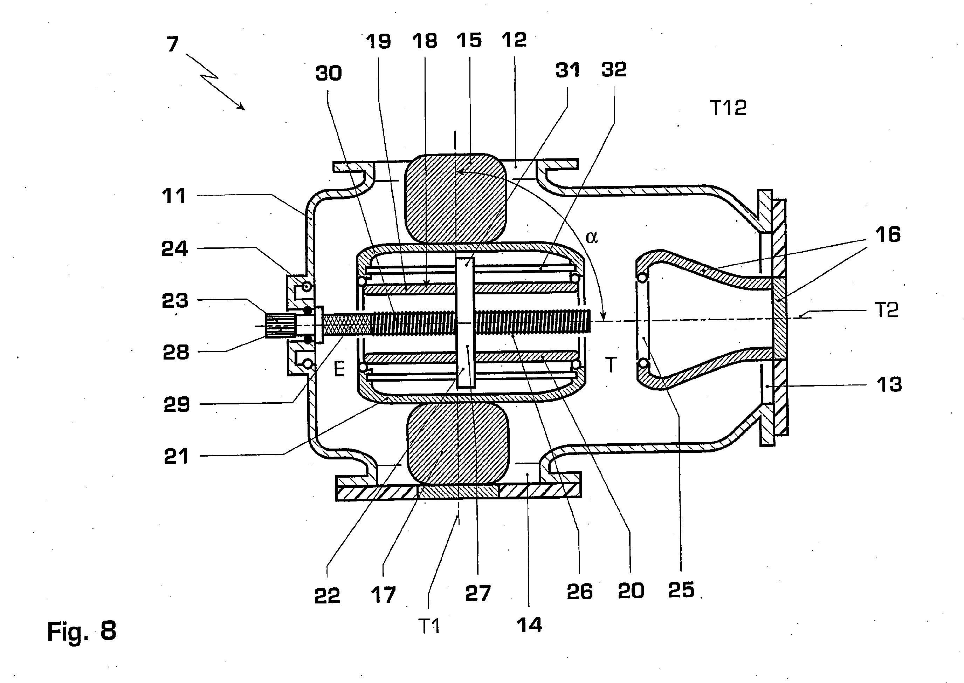

In einem wichtigen Ausführungsbeispiel ist der Winkeltrenner 7 ein für gasisolierte Schaltanlagen konzipierter Standard-Kombitrenner 7. Fig. 8 zeigt als bevorzugtes Beispiel einen Kombitrenner 7, der Gegenstand der eingangs genannten EP 1 569 254 A1 ist, deren gesamter Inhalt hiermit durch Bezugnahme in die Beschreibung aufgenommen wird. Im Detail sind dargestellt: im Winkeltrennergehäuse 11 eine erste und bedarfsweise eine zweite Trenneröffnung 12, 13 entlang der Eingangsachse T1, eine dritte Trenneröffnung 14 entlang der Ausgangsachse T2, wobei die Rollen von Eingangs- und Ausgangsachse T1, T2 auch vertauscht sein können; Trennerstromleiter 15, 16, 17 entlang der Trennerachsen T1 bzw. T2; ein verschiebbares zweiteiliges Kontaktelement 18, das einen Trenner-Kontaktteil 20 und/oder einen Erder-Kontaktteil 19 umfasst; ein Leiterrohr 21 zur Aufnahme des bewegbaren Kontaktelements 18; ein Haltekörper 22 zur lösbaren Befestigung des Trenner-Kontaktteils 20 und/oder des Erder-Kontaktteils 19, die hier als Kontaktrohre 20, 19 ausgeführt sind, wobei der Haltekörper 22 über einen Trennerantrieb 23, 70 linear verschiebbar ist. Im einzelnen bezeichnen 23 eine Trennerantriebswelle, 26 eine Gewindespindel, 27 eine Spindelmutter, 28, 29 und 30 Spindelabschnitte, 31 einen Gleitkörper und 32 mindestens eine Führungsschiene. Statt eines Spindelantriebs kann auch ein linearer Schubantrieb, eine Kombination oder ein anderweitiger Kombitrenner-Antrieb implementiert sein. Der Trennerkontakt 25 dient bei geschlossener Trennerstrecke T zur Aufnahme des Trenner-Kontaktteils 20. Der Erdungskontakt 24 dient bei geschlossener Erderstrecke E zur Aufnahme des Erder-Kontaktteils 19. Ein besonderer Vorteil dieses Kombitrenners 7 besteht darin, dass durch einfache Montage des Trenner-Kontaktteils 20 und/oder des Erder-Kontaktteils 19 eine Trenner- und/oder Erderfunktion implementierbar ist. Auch ist eine nachträgliche Umrüstung zwischen Trenner-, Erder- und Kombifunktion durch Demontage und/oder Ummontage eines der Kontakteile 19, 20 sehr einfach möglich. Ein weiterer grosser Vorteil besteht darin, dass der Kombitrenner gemäss Fig. 8 bzw. EP 1 569 254 in T- Form mit drei Trenneröffnungen 12, 13, 14 oder in L-Form mit nur zwei Trenneröffnungen 12, 13 oder 14, 13 verwendbar ist, wobei an der zu verschliessenden dritten oder ersten Trenneröffnung 14 oder 12 der Trennerstromleiter 17 oder 15 durch eine Kappe (nicht dargestellt) ersetzt ist. Gegebenenfalls könnte dort auch ein Zusatzgerät o. ä. angeflanscht sein.

Ein grosser Vorteil besteht darin, dass sämtliche Trenner 7 der Schaltgeräte 1 (Fig.1-4) und der Schalteranordnungen 1b (Fig. 5-7) als Winkeltrenner 7 gemäss Fig. 8 gewählt sein können.

### BEZUGSZEICHENLISTE

- 1: elektrisches Schaltgerät, Hochspannungsleistungsschalter, Hochstromschalter
- 1a: Zentrale Achse, Schalterachse, Längsachse
- 1b: Schalteranordnung
- 2: Leistungsschalter, Unterbrechereinheit, Schaltkammer
- 2a: Mantelfläche des Schaltergehäuses
- 3: Gehäuse des Leistungsschalters, Schaltergehäuse
- 3a - 3d: mantelseitige Anschlussflansche
- 4: Abgang
- 40: Freiluftdurchführung
- 41: Hochspannungsterminal
- 42: Kabelabgang
- 43: Kabel
- 5: Schalterantrieb
- 5a: stirnseitiger Anschlussflansch (für Antrieb)
- 6: Druckentlastungsklappe
- 6a: stirnseitiger Anschlussflansch
- 7: Winkeltrenner, Winkelbaustein mit Trenner- und/oder Erderfunktion, Winkel-Kombitrenner
- 70: Trenner/Erder-Antrieb
- 71: Schnellerder
- 8: Stromwandler
- 9: Traggestell, Betonsockel
- 10: Antriebsgestänge für gemeinsamen Trennerantrieb
- 11: Winkeltrennergehäuse
- 12, 13, 14: Trenneröffnungen
- 15, 16, 17: Trennerstromleiter
- 18: Kontaktelement, zweiteiliges Kontaktrohr
- 19: Erder-Kontaktteil
- 20: Trenner-Kontakteil
- 21: Leiterrohr
- 22: Haltekörper
- 23: Trennerantriebswelle
- 24: Erdungskontakt
- 25: Trennerkontakt
- 26: Gewindespindel
- 27: Spindelmutter
- 28, 29, 30: Spindelabschnitte
- 31: Gleitkörper
- 32: Führungsschiene

- A, B, C, D: Längsachsen der Abgänge
- H1, H2: Mittenachse der mantelseitigen, nichtvertikalen Stromanschlüsse
- E: Erder
- T: Trenner
- T1, T2: Trennerachsen
- T1: Eingangsachse
- T2: Ausgangsachse
- T12: Trennerebene
- x, y, z: kartesische Koordinaten
- α: Trennerwinkel
- β: Verdrehwinkel, Verkippwinkel für Abgänge
- γ: Positionswinkel für mantelseitigen Stromanschluss

## Patentansprüche

1. Elektrisches Schaltgerät (1) für ein elektrisches Energieversorgungsnetz, insbesondere Hochspannungsschalter (1), umfassend einen Leistungsschalter (2), der in einem entlang einer Längsachse (1a, x) erstreckten Gehäuse (3) angeordnet ist, wobei das Gehäuse (3) an seiner Mantelfläche (2a) mindestens einen mantelseitigen Stromanschluss (3b, 3c, 3d) aufweist, der zum Anschluss eines Abgangs (4; 40, 42) dient und eine Mittenachse (H1, H2) hat, die in Betriebsstellung des Schaltgeräts (1) eine horizontale Raumkomponente (x, y) aufweist, **dadurch gekennzeichnet, dass**
a) zwischen dem mantelseitigen Stromanschluss (3b, 3c, 3d) und dem Abgang (4; 40, 42) ein gekapselter Winkeltrenner (7) montiert ist, dessen stromanschlussseitige Eingangsachse (T1) parallel zur Mittenachse (H1, H2) und dessen abgangsseitige Ausgangsachse (T2) parallel zu einer Längsachse (B, C, D) des Abgangs (4; 40, 42) liegt,
b) wobei durch die Eingangsachse (T1) und die Ausgangsachse (T2) eine Trennerebene (T12) definiert ist und zwischen der Eingangsachse (T1) und der Ausgangsachse (T2) ein Trennerwinkel (α) eingeschlossen ist, durch den der Stromanschluss (3b, 3c, 3d) in Betriebsstellung des Schaltgeräts (1) in der Trennerebene (T12) umgelenkt ist.

2. Elektrisches Schaltgerät (1) nach Anspruch 1, **dadurch gekennzeichnet, dass** der Winkeltrenner (7) unmittelbar und ohne Verwendung von Zwischenbausteinen eingangsseitig an den Stromanschluss (3b, 3c, 3d) und ausgangsseitig an den Abgang (4; 40, 42) montiert ist.

3. Elektrisches Schaltgerät (1) nach Anspruch 1, **dadurch gekennzeichnet, dass** der Stromanschluss (3b, 3c, 3d) durch den Trennerwinkel (α) in der Trennerebene (T12) zur Vertikalen hin umgelenkt ist.

4. Elektrisches Schaltgerät (1) nach einem der vorangehenden Ansprüche, **dadurch gekennzeichnet, dass** der Abgang (4, 40) eine Freiluftdurchführung (4, 40) ist und der Stromanschluss (3b, 3c, 3d) durch den Trennerwinkel (α) in der Trennerebene (T12) zur Vertikalen nach oben hin umgelenkt ist.

5. Elektrisches Schaltgerät (1) nach einem der vorangehenden Ansprüche, **dadurch gekennzeichnet, dass** der Abgang (4, 42) ein Kabelabgang (4, 42) ist und der Stromanschluss (3b, 3c, 3d) durch den Trennerwinkel (α) in der Trennerebene (T12) zur Vertikalen nach unten hin umgelenkt ist.

6. Elektrisches Schaltgerät (1) nach einem der vorangehenden Ansprüche, **dadurch gekennzeichnet, dass** die Mittenachse (H1, H2) mit der Vertikalen einen Positionswinkel (γ) einschliesst und
a) der Positionswinkel (γ) im Bereich 30°<γ<150°, bevorzugt 60°<γ<120° und besonders bevorzugt 80°<γ<100° liegt und insbesondere γ=90° beträgt, und/oder
b) der Trennerwinkel (α) im Bereich 30°<α<150°, bevorzugt 60°<α<120° und besonders bevorzugt 80°<α<100° liegt und insbesondere α=90° beträgt.

7. Elektrisches Schaltgerät (1) nach Anspruch 6, **dadurch gekennzeichnet, dass** der Trennerwinkel (α) und der Positionswinkel (γ) so aufeinander abgestimmt sind, dass der Abgang (4; 40, 42) unter maximal 60°, bevorzugt maximal 45°, besonders bevorzugt maximal 30° zur Vertikalen weggeführt ist.

8. Elektrisches Schaltgerät (1) nach einem der vorangehenden Ansprüche, **dadurch gekennzeichnet, dass**
a) im Falle eines Abgangs mit Freiluftdurchführung (4, 40) eine Summe des Trennerwinkels (α) und des Positionswinkels (γ) im Bereich 130°<α+γ<230°, bevorzugt 140°<α+γ<220°, und besonders bevorzugt 150°<α+γ<210° liegt und insbesondere α+γ=180° beträgt und/oder
b) im Falle einer Kabelabbgangs (4, 42) eine Summe des Trennerwinkels (α) und des Positionswinkels (γ) im Bereich -50°<α-γ<50°, bevorzugt -40°<α-γ<40°, besonders bevorzugt -30°<α-γ<30° liegt und insbesondere α-γ=0° beträgt.

9. Elektrisches Schaltgerät (1) nach einem der vorangehenden Ansprüche, **dadurch gekennzeichnet, dass**
a) der Winkeltrenner (7) in einer verdrehten Orientierung am Stromanschluss (3b, 3c, 3d) fest montiert ist, wobei der Verdrehwinkel (β) zwischen der Trennerebene (T12) und einer vertikalen Bezugsebene durch die Eingangsachse (T1) vorgebbar ist und
b) insbesondere dass der Verdrehwinkel (β) im Bereich 0°<|β|<70°, bevorzugt 0°<|β|<50°, besonders bevorzugt 0°<|β|<30° liegt und insbesondere durch den Winkelabstand an einem Lochkreis-Montageflansch bestimmt ist und
c) insbesondere dass bei einem Kabelabgang (4, 42) der Verdrehwinkel (β) im Bereich 110°<|β|<180°, bevorzugt 130°<|β|<180°, besonders bevorzugt 150°<|β|<180° liegt.

10. Elektrisches Schaltgerät (1) nach einem der vorangehenden Ansprüche, **dadurch gekennzeichnet, dass** mehrere mantelseitige, nicht vertikale Stromanschlüsse (3b, 3c, 3d) vorhanden und jeweils über Winkeltrenner (7) unmittelbar mit Abgängen (4; 40, 42), insbesondere mit Freiluftdurchführungen (4, 40) und/oder Kabelabgängen (4, 42), verbunden sind.

11. Elektrisches Schaltgerät (1) nach Anspruch 10, **dadurch gekennzeichnet, dass**
a) die Stromanschlüsse (3b, 3c, 3d) entlang der Längsachse (1a, x) zueinander versetzt angeordnet sind und/oder
b) die Stromanschlüsse (3b, 3c, 3d) bezüglich einer vertikalen Längsebene durch das Gehäuse (3) des Schaltgeräts (1) auf einander einander gegenüberliegenden Seiten angeordnet sind.

12. Elektrisches Schaltgerät (1) nach einem der vorangehenden Ansprüche, **dadurch gekennzeichnet, dass**
a) zusätzlich mindestens ein mantelseitiger, vertikaler Anschluss (3a) für Freiluftdurchführungen (4, 40) oder für Zusatzgeräte vorhanden ist und/oder
b) zusätzlich mindestens ein stirnseitiger Anschluss für Freiluftdurchführungen oder für Zusatzgeräte vorhanden ist.

13. Elektrisches Schaltgerät (1) nach einem der vorangehenden Ansprüche, **dadurch gekennzeichnet, dass**
a) das Schaltgerät (1) einphasig gekapselt ist und drei Phasen derartiger Schaltgeräte (1) parallel nebeneinander angeordnet sind und
b) die Winkeltrenner (7) über eine gemeinsame Antriebsstange (10) von einem gemeinsamen Trennerantrieb (70) angetrieben sind.

14. Elektrisches Schaltgerät (1) nach einem der vorangehenden Ansprüche, **dadurch gekennzeichnet, dass**
a) die Längsachse (1a, x) des Gehäuses (3) horizontal liegt und
b) ein Querschnittsprofil des Gehäuses (3) ganz oder teilweise rund, oval, rechteckig oder polygonal geformt ist.

15. Elektrisches Schaltgerät (1) nach einem der vorangehenden Ansprüche, **dadurch gekennzeichnet, dass**
a) das Schaltgerät (1) ein Hochspannungsleistungsschalter (1) oder ein Hochstromschalter ist, und/oder
b) das Schaltgerät (1) ein Dead Tank Breaker (1), ein AIS/GIS-Hybridschalter (1), oder ein GIS-Schalter mit einem Freiluftabgang oder Kabelabgang ist.

16. Elektrisches Schaltgerät (1) nach einem der vorangehenden Ansprüche, **dadurch gekennzeichnet, dass**
a) der Winkeltrenner (7) ein für gasisolierte Schaltanlagen konzipierter Standard-Kombitrenner (7) ist, der ein verschiebbares zweiteiliges Kontaktelement (18) mit einem Trenner-Kontaktteil (20) und/oder einem Erder-Kontaktteil (19) aufweist,
b) insbesondere dass das Trenner-Kontaktteil (20) und/oder das Erder-Kontaktteil (19) an einem Haltekörper (22) lösbar befestigte Kontaktrohre (20, 19) sind und der Haltekörper (22) über einen Trennerantrieb (23, 70) linear verschiebbar ist.

17. Elektrisches Schaltgerät (1) nach einem der vorangehenden Ansprüche, **dadurch gekennzeichnet, dass**
a) die Mittenachse (H1, H2) des mantelseitigen Stromanschlusses (3b, 3c, 3d) des Leistungsschalters (2) in der Horizontalen liegt und
b) der Trennerwinkel (α) im Bereich 80°<α<100° liegt und insbesondere α=90° beträgt.

18. Elektrisches Schaltgerät (1) nach einem der vorangehenden Ansprüche, **dadurch gekennzeichnet, dass**
a) der Winkeltrenner (7) eine T-Form hat, bei welcher entlang der Eingangsachse (T1) eine erste Trenneröffnung (12) und gegenüberliegend eine dritte Trenneröffnung (14) sowie entlang der Ausgangsachse (T2) eine zweite Trenneröffnung (13) vorhanden ist, und
b) insbesondere dass der Winkeltrenner (7) eine rechtwinklige T-Form hat, bei welcher die Ausgangsachse (T2) rechtwinklig zur Eingangsachse (T1) steht und entlang der Ausgangsachse (T2) die Trennstrecke (T) und/oder Erdungsstrecke (E) angeordnet ist oder sind.

19. Schalteranordnung (1b), **gekennzeichnet durch** mindestens ein elektrisches Schaltgerät (1), das gemäss einem der Ansprüche 1-17 ausgestaltet ist.

20. Schalteranordnung (1b) nach Anspruch 19, **dadurch gekennzeichnet, dass** ein Winkeltrenner (7) in T-Form gemäss Anspruch 18 vorhanden ist, durch den zwei Leistungsschalter (2) mantelseitig miteinander verbunden sind.

21. Schalteranordnung (1b) nach einem der Ansprüche 19-20,
**dadurch gekennzeichnet, dass**
a) drei Schaltgeräte (1) in einer 1½-Schalter-Anordnung über Winkeltrenner (7) miteinander verbunden sind und
b) insbesondere dass die Schaltgeräte (1) horizontal und zueinander parallel angeordnet sind.

22. Schalteranordnung (1b) nach Anspruch 21, **dadurch gekennzeichnet, dass**
a) das mittlere Schaltgerät (1) an zwei mantelseitigen, horizontalen, zueinander axial versetzten Stromanschlüssen (3b, 3d) über die Winkeltrenner (7) mit den beiden anderen Schaltgeräten (1) verbunden ist und
b) die Winkeltrenner (7) eine rechtwinklige T-Form haben und entlang ihrer Eingangsachse (T1) mit den anderen Schaltgeräten (1) verbunden sind und entlang ihrer Ausgangsachse (T2) jeweils mit einem Abgang (4; 40, 42), insbesondere einer Freiluftdurchführung (4, 40) nach oben oder mit einem Kabelabgäng (4, 42) nach unten, verbunden sind.

23. Schalteranordnung (1b) nach einem der Ansprüche 21-22,
**dadurch gekennzeichnet, dass**
a) mindestens einer der Winkeltrenner (7) unmittelbar und ohne Verwendung von Zwischenbausteinen entlang seiner Eingangsachse (T1) mit den anderen Schaltgeräten (1) und entlang seiner Ausgangsachse (T2) mit dem Abgang (4; 40, 42) verbunden ist, und/oder
b) mindestens einer der Winkeltrenner (7) beidseitig entlang seiner Eingangsachse (T1) über je einen weiteren Winkeltrenner (7) mit den anderen Schaltgeräten (1) verbunden ist.

24. Schalteranordnung (1b) nach Anspruch 21, **dadurch gekennzeichnet, dass**
a) das mittlere Schaltgerät (1) an zwei mantelseitigen, vertikalen, zueinander axial versetzten Stromanschlüssen (3a) über die Winkeltrenner (7) mit den beiden anderen Schaltgeräten (1) verbunden ist und
b) die Winkeltrenner (7) eine rechtwinklige T-Form haben und entlang ihrer Eingangsachse (T1) über je einen weiteren Winkeltrenner (7) mit den anderen Schaltgeräten (1) verbunden sind und entlang ihrer Ausgangsachse (T2) jeweils mit einem Abgang (4; 40, 42) nach oben oder nach unten verbunden sind.

25. Schalteranordnung (1b) nach einem der Ansprüche 19-24,
**dadurch gekennzeichnet, dass**
a) sämtliche Trenner (7) der Schalteranordnung (1b) die Winkeltrenner (7) mit den kennzeichnenden Merkmalen von Anspruch 16 sind und
b) entlang ihrer Eingangsachse (T1) die erste Trenneröffnung (12) und entlang ihrer Ausgangsachse (T2) die zweite Trenneröffnung (13) sowie bedarfsweise gegenüberliegend der ersten Trenneröffnung (12) eine dritte Trenneröffnung (14) aufweisen.

## Claims

1. Electrical switching device (1) for an electrical energy supply system, in particular high-voltage switch (1), comprising a circuit breaker (2), which is arranged in a housing (3), which extends along a longitudinal axis (1a, x), the housing (3) having at least one mantle-side electrical connection (3b, 3c, 3d) on its mantle face (2a), which electrical connection is used for connecting an outgoing feeder (4; 40, 42) and has a mid-axis (H1, H2), which, in the operating position of the switching device (1), has a horizontal spatial component (x, y), **characterized in that**
a) an encapsulated right-angled disconnector (7), whose input axis (T1) on the electrical-connection side is positioned parallel to the mid-axis (H1, H2) and whose output axis (T2) on the outgoing-feeder side is positioned parallel to a longitudinal axis (B, C, D) of the outgoing feeder (4; 40, 42), is fitted between the mantle-side electrical connection (3b, 3c, 3d) and the outgoing feeder (4; 40, 42),
b) a disconnector plane (T12) being defined by the input axis (T1) and the output axis (T2), and a disconnector angle (α) being enclosed between the input axis (T1) and the output axis (T2), through which angle the electrical connection (3b, 3c, 3d) is deflected in the operating position of the switching device (1) in the disconnector plane (T12).

2. Electrical switching device (1) according to Claim 1, **characterized in that** the right-angled disconnector (7) is fitted directly and without the use of intermediate modules on the input side at the electrical connection (3b, 3c, 3d) and on the output side at the outgoing feeder (4; 40, 42).

3. Electrical switching device (1) as claimed in Claim 1, **characterized in that** the electrical connection (3b, 3c, 3d) is deflected through the disconnector angle (α) in the disconnector plane (T12) towards the vertical.

4. Electrical switching device (1) as claimed in one of the preceding claims, **characterized in that** the outgoing feeder (4, 40) is an outdoor bushing (4, 40), and the electrical connection (3b, 3c, 3d) is deflected through the disconnector angle (α) in the disconnector plane (T12) upwards towards the vertical.

5. Electrical switching device (1) as claimed in one of the preceding claims, **characterized in that** the outgoing feeder (4, 42) is an outgoing cable (4, 42), and the electrical connection (3b, 3c, 3d) is deflected through the disconnector angle (α) in the disconnector plane (T12) downwards towards the vertical.

6. Electrical switching device (1) as claimed in one of the preceding claims, **characterized in that** the mid-axis (H1, H2) encloses a position angle (γ) with the vertical and
a) the position angle (γ) is in the range of 30°<γ<150°, preferably 60°<γ<120° and particularly preferably 80°<γ<100° and in particular γ=90°, and/or
b) the disconnector angle (α) is in the range of 30°<α<150°, preferably 60°<α<120° and particularly preferably 80°<γ<100° and in particular α=90°.

7. Electrical switching device (1) as claimed in Claim 6, **characterized in that** the disconnector angle (α) and the position angle (γ) are matched to one another in such a way that the outgoing feeder (4; 40, 42) is moved away with respect to the vertical below a maximum of 60°, preferably a maximum of 45°, particularly preferably a maximum of 30°.

8. Electrical switching device (1) as claimed in one of the preceding claims, **characterized in that**
a) in the case of an outgoing feeder with outdoor bushing (4, 40), a sum of the disconnector angle (α) and the position angle (γ) is the range of 130°<α+γ<230°, preferably 140°<α+γ<220°, and particularly preferably 150°<α+γ<210° and in particular α+γ=180°, and/or
b) in the case of an outgoing cable (4, 42), a sum of the disconnector angle (α) and the position angle (γ) is in the range of -50°<α-γ<50°, preferably -40°<α-γ<40°, particularly preferably -30°<α-γ<30° and in particular α-γ=0°.

9. Electrical switching device (1) as claimed in one of the preceding claims, **characterized in that**
a) the angle disconnector (7) is fitted fixedly on the electrical connection (3b, 3c, 3d) with a rotated orientation, it being possible for the rotation angle (β) between the disconnector plane (T12) and a vertical reference plane to be predetermined by the input axis (T1), and
b) in particular that the rotation angle (β) is in the range 0°<|β|<70°, preferably 0°<|β|<50°, particularly preferably 0°<|β|<30° and is in particular determined by the angular spacing on a pitch circle mounting flange, and
c) in particular that, in the case of an outgoing cable (4, 42), the rotation angle (β) is in the range of 110°<|β|<180°, preferably 130°<|β|<180°, particularly preferably 150°<|β|<180°.

10. Electrical switching device (1) as claimed one of the preceding claims, **characterized in that** a plurality of mantle-side, non-vertical electrical connections (3b, 3c, 3d) are provided and are each connected via right-angled disconnectors (7) directly to outgoing feeders (4; 40, 42), in particular to outdoor bushings (4, 40) and/or outgoing cables (4, 42).

11. Electrical switching device (1) as claimed in Claim 10, **characterized in that**
a) the electrical connections (3b, 3c, 3d) are arranged offset with respect to one another along the longitudinal axis (1a, x) and/or
b) the electrical connections (3b, 3c, 3d) are arranged with respect to a vertical longitudinal plane through the housing (3) of the switching device (1) on mutually opposite sides.

12. Electrical switching device (1) as claimed in one of the preceding claims, **characterized in that**
a) in addition at least one mantle-side, vertical connection (3a) for outdoor bushings (4, 40) or for additional devices is provided and/or
b) in addition at least one end-side connection for outdoor bushings or for additional devices is provided.

13. Electrical switching device (1) as claimed in one of the preceding claims, **characterized in that**
a) the switching device (1) is single-phase-encapsulated and three phases of such switching devices (1) are arranged in parallel with one another, and
b) the right-angled disconnectors (7) are driven via a common drive rod (10) by a common disconnector drive (70).

14. Electrical switching device (1) as claimed in one of the preceding claims, **characterized in that**
a) the longitudinal axis (1a, x) of the housing (3) is horizontal, and
b) a cross-sectional profile of the housing (3) is shaped so as to be entirely or partially round, oval, rectangular or polygonal.

15. Electrical switching device (1) as claimed in one of the preceding claims, **characterized in that**
a) the switching device (1) is a high-voltage circuit breaker (1) or a heavy-duty switch, and/or
b) the switching device (1) is a dead tank breaker (1), an AIS/GIS hybrid switch (1), or a GIS switch with an outdoor outgoing feeder or outgoing cable.

16. Electrical switching device (1) as claimed in one of the preceding claims, **characterized in that**
a) the right-angled disconnector (7) is a standard combination disconnector (7), which is designed for gas-insulated switchgear assemblies and has a displaceable two-part contact element (18) with a disconnector contact part (20) and/or a grounding-switch contact part (19),
b) in particular that the disconnector contact part (20) and/or the grounding-switch contact part (19) are contact tubes (20, 19), which are fixed detachably on a holding element (22), and the holding element (22) is linearly displaceable via a disconnector drive (23, 70).

17. Electrical switching device (1) as claimed in one of the preceding claims, **characterized in that**
a) the mid-axis (H1, H2) of the mantle-side electrical connection (3b, 3c, 3d) of the circuit breaker (2) is on the horizontal, and
b) the disconnector angle (α) is in the range of 80°<α<100° and in particular α=90°.

18. Electrical switching device (1) as claimed in one of the preceding claims, **characterized in that**
a) the right-angled disconnector (7) has a T shape, in which a first disconnector opening (12) is provided along the input axis (T1) and, opposite this, a third disconnector opening (14) is provided and a second disconnector opening (13) is provided along the output axis (T2), and
b) in particular that the right-angled disconnector (7) has a right-angled T shape, in which the output axis (T2) is at right angle with respect to the input axis (T1) and the disconnection path (T) and/or grounding path (E) is or are arranged along the output axis (T2).

19. Switch arrangement (1b), **characterized by** at least one electrical switching device (1), which is configured as claimed in one of Claims 1-17.

20. Switch arrangement (1b) as claimed in Claim 19, **characterized in that** a right-angled disconnector (7) with a T shape as claimed in Claim 18 is provided, by means of which two circuit breakers (2) are connected to one another on the mantle side.

21. Switch arrangement (1b), as claimed in one of Claims 19-20, **characterized in that**
a) three switching devices (1) are connected to one another via right-angled disconnectors (7) with a 1½ switch arrangement, and
b) in particular that the switching devices (1) are arranged horizontally and parallel to one another.

22. Switch arrangement (1b) as claimed in Claim 21,
**characterized in that**
a) the central switching device (1) is connected to the two other switching devices (1) via the right-angled disconnectors (7), at two mantle-side, horizontal electrical connections (3b, 3d), which are axially offset with respect to one another, and
b) the right-angled disconnectors (7) have a right-angled T shape and are connected to the other switching devices (1) along their input axis (T1) and are each connected to an outgoing feeder (4; 40, 42), in particular an outdoor bushing (4, 40) at the top or to an outgoing cable (4, 42) at the bottom along their output axis (T2).

23. Switch arrangement (1b) as claimed in one of Claims 21-22, **characterized in that**
a) at least one of the right-angled disconnectors (7) is connected directly and without the use of intermediate modules along its input axis (T1) to the other switching devices (1) and along its output axis (T2) to the outgoing feeder (4; 40, 42), and/or
b) at least one of the right-angled disconnectors (7) is connected on both sides along its input axis (T1) via in each case one further right-angled disconnector (7) to the other switching devices (1).

24. Switch arrangement (1b) as claimed in Claim 21,
**characterized in that**
a) the central switching device (1) is connected via the right-angled disconnectors (7) to the two other switching devices (1) at two mantle-side, vertical electrical connections (3a), which are axially offset with respect to one another, and
b) the right-angled disconnectors (7) have a right-angled T shape and are connected along their input axis (T1) via in each case one further right-angled disconnector (7) to the other switching devices (1) and along their output axis (T2) in each case to an outgoing feeder (4; 40, 42) at the top or at the bottom.

25. Switch arrangement (1b) as claimed in one of Claims 19-24, **characterized in that**
a) all of the disconnectors (7) of the switch arrangement (1b) are the right-angled disconnectors (7) with the characterizing features of claim 16, and
b) have, along their input axis (T1), the first disconnector opening (12) and, along their output axis (T2), the second disconnector opening (13) and, if necessary, opposite the first disconnector opening (12) a third disconnector opening (14).

## Revendications

1. Commutateur électrique (1) pour un réseau de distribution d'énergie, notamment commutateur à haute tension (1), comprenant un commutateur de puissance (2) qui est disposé dans un boîtier (3) s'étendant le long d'un axe longitudinal (1a, x), le boîtier (3) présentant sur sa surface d'enveloppe (2a) au moins une borne électrique côté enveloppe (3b, 3c, 3d), laquelle sert au branchement d'un départ (4 ; 40, 42) et possédant un axe central (H1, H2) qui, en position opérationnelle du commutateur (1) présente une composante spatiale horizontale (x, y), **caractérisé en ce que**
a) entre la borne électrique côté enveloppe (3b, 3c, 3d) et le départ (4 ; 40, 42) est monté un sectionneur coudé (7) en boîtier dont l'axe d'entrée (T1) côté borne électrique est parallèle à l'axe central (H1, H2) et dont l'axe de sortie (T2) côté départ est parallèle à un axe longitudinal (B, C, D) du départ (4 ; 40, 42),
b) un plan de sectionnement (T12) étant défini par l'axe d'entrée (T1) et l'axe de sortie (T2) et entre l'axe d'entrée (T1) et l'axe de sortie (T2) est inclus un angle de sectionnement (α) par le biais duquel, en position opérationnelle du commutateur (1), la borne électrique (3b, 3c, 3d) est déviée dans le plan de sectionnement (T12).

2. Commutateur électrique (1) selon la revendication 1, **caractérisé en ce que** le sectionneur coudé (7) est monté directement, et sans utiliser de composants intermédiaires, du côté de l'entrée sur la borne électrique (3b, 3c, 3d) et du côté de la sortie sur le départ (4 ; 40, 42).

3. Commutateur électrique (1) selon la revendication 1, **caractérisé en ce que** la borne électrique (3b, 3c, 3d) est déviée dans le plan de sectionnement (T12) en direction de la verticale par l'angle de sectionnement (α).

4. Commutateur électrique (1) selon l'une des revendications précédentes, **caractérisé en ce que** le départ (4, 40) est un passage à l'air libre (4, 40) et la borne électrique (3b, 3c, 3d) est déviée dans le plan de sectionnement (T12) en direction de la verticale vers le haut par l'angle de sectionnement (α).

5. Commutateur électrique (1) selon l'une des revendications précédentes, **caractérisé en ce que** le départ (4, 42) est un départ de câble (4, 42) et la borne électrique (3b, 3c, 3d) est déviée dans le plan de sectionnement (T12) en direction de la verticale vers le bas par l'angle de sectionnement (α).

6. Commutateur électrique (1) selon l'une des revendications précédentes, **caractérisé en ce que** l'axe central (H1, H2) forme avec la verticale un angle de position (γ) et
a) l'angle de position (γ) se trouve dans la plage 30° < γ < 150°, de préférence 60° < γ < 120° et notamment de préférence 80° < γ < 100° et plus particulièrement γ = 90°, et/ou
b) l'angle de sectionnement (α) se trouve dans la plage 30° < α < 150°, de préférence 60° < α < 120° et notamment de préférence 80° < α < 100° et plus particulièrement α = 90°.

7. Commutateur électrique (1) selon la revendication 6, **caractérisé en ce que** l'angle de sectionnement (α) et l'angle de position (γ) sont accordés l'un sur l'autre de telle sorte que le départ (4 ; 40, 42) s'éloigne sous un angle maximum de 60°, de préférence maximum de 45°, notamment de préférence maximum de 30° par rapport à la verticale.

8. Commutateur électrique (1) selon l'une des revendications précédentes, **caractérisé en ce que**
a) dans le cas d'un départ avec passage à l'air libre (4, 40), une somme de l'angle de sectionnement (α) et de l'angle de position (γ) se trouve dans la plage 130° < α+γ < 230°, de préférence 140° < α+γ < 220° et notamment de préférence 150° < α+γ < 210° et plus particulièrement α+γ = 180°, et/ou
b) dans le cas d'un départ de câble (4, 42), une somme de l'angle de sectionnement (α) et de l'angle de position (γ) se trouve dans la plage -50° < α-γ < 50°, de préférence -40° < α-γ < 40° et notamment de préférence -30° < α-γ < 30° et plus particulièrement α-γ = 0°.

9. Commutateur électrique (1) selon l'une des revendications précédentes, **caractérisé en ce que**
a) le sectionneur coudé (7) est monté à demeure sur la borne électrique (3b, 3c, 3d) selon une orientation gauchie, l'angle de gauchissement (β) entre le plan de sectionnement (T12) et un plan de référence vertical pouvant être prédéfini par l'axe d'entrée (T1) et
b) notamment que l'angle de gauchissement (β) se trouve dans la plage 0° < |β| < 70°, de préférence 0° < |β| < 50°, notamment de préférence 0° < |β| < 30° et il est notamment déterminé par l'écart angulaire au niveau d'une bride de montage à cercle de trous et
c) notamment que dans le cas d'un départ de câble (4, 42), l'angle de gauchissement (β) se trouve dans la plage 110° < |β| < 180°, de préférence 130° < |β| < 180°, notamment de préférence 150° < |β| < 180°.

10. Commutateur électrique (1) selon l'une des revendications précédentes, **caractérisé en ce qu'**il existe plusieurs bornes électriques (3b, 3c, 3d) non verticales côté enveloppe et elles sont respectivement reliées par le biais d'un sectionneur coudé (7) directement avec les départs (4 ; 40, 42), notamment avec les passages à l'air libre (4, 40) et/ou les départs de câble (4, 42).

11. Commutateur électrique (1) selon la revendication 10, **caractérisé en ce que**
a) les bornes électriques (3b, 3c, 3d) sont disposées décalées les unes par rapport aux autres le long de l'axe longitudinal (1a, x) et/ou
b) les bornes électriques (3b, 3c, 3d) sont disposées sur des côtés opposés l'un à l'autre par rapport à un plan longitudinal vertical à travers le boîtier (3) du commutateur (1).

12. Commutateur électrique (1) selon l'une des revendications précédentes, **caractérisé en ce que**
a) il existe en plus au moins une borne (3a) verticale côté enveloppe pour les passages à l'air libre (4, 40) ou pour des appareils supplémentaires et/ou
b) il existe en plus au moins une borne côté frontal pour les passages à l'air libre ou pour des appareils supplémentaires.

13. Commutateur électrique (1) selon l'une des revendications précédentes, **caractérisé en ce que**
a) le commutateur (1) est en boîtier monophasé et les trois phases des commutateurs (1) de ce type sont disposées parallèlement les unes aux autres et
b) les sectionneurs coudés (7) sont entraînés par le biais d'une tige d'entraînement (10) commune par un mécanisme d'entraînement de sectionneur (70) commun.

14. Commutateur électrique (1) selon l'une des revendications précédentes, **caractérisé en ce que**
a) l'axe longitudinal (1a, x) du boîtier (3) est en position horizontale et
b) un profil de section transversale du boîtier (3) est entièrement ou partiellement rond, ovale, rectangulaire ou polygonal.

15. Commutateur électrique (1) selon l'une des revendications précédentes, **caractérisé en ce que**
a) le commutateur (1) est un commutateur de puissance à haute tension (1) ou un commutateur à courant fort et/ou
b) le commutateur (1) est un disjoncteur sous vide (1), un commutateur hybride AIS/GIS (1) ou un commutateur GIS muni d'un départ à l'air libre ou d'un départ de câble.

16. Commutateur électrique (1) selon l'une des revendications précédentes, **caractérisé en ce que**
a) le sectionneur coudé (7) est un sectionneur combiné standard (7) conçu pour les équipements de commutation à isolement gazeux qui présente un élément de contact (18) coulissant en deux parties muni d'une pièce de contact de sectionneur (20) et/ou une pièce de contact de mise à la terre (19),
b) notamment que la pièce de contact de sectionneur (20) et/ou la pièce de contact de mise à la terre (19) sont des tubes de contact (20, 19) fixés de manière amovible à un corps de maintien (22) et le corps de maintien (22) peut effectuer une translation linéaire par le biais d'un mécanisme d'entraînement de sectionneur (23, 70).

17. Commutateur électrique (1) selon l'une des revendications précédentes, **caractérisé en ce que**
a) l'axe central (H1, H2) de la borne électrique côté enveloppe (3b, 3c, 3d) du commutateur de puissance (2) est en position horizontale et
b) l'angle de sectionnement (α) se trouve dans la plage 80° < α < 100° et plus particulièrement α = 90°.

18. Commutateur électrique (1) selon l'une des revendications précédentes, **caractérisé en ce que**
a) le sectionneur coudé (7) présente la forme d'un T sur lequel il existe une première ouverture de sectionneur (12) le long de l'axe d'entrée (T1) et une troisième ouverture de sectionneur (14) à l'opposé ainsi qu'une deuxième ouverture de sectionneur (13) le long de l'axe de sortie (T2) et
b) notamment que le sectionneur coudé (7) présente la forme d'un T à angles droits sur lequel l'axe de sortie (T2) est perpendiculaire à l'axe d'entrée (T1) et la section de sectionnement (T) et/ou la section de mise à la terre (E) est ou sont disposée(s) le long de l'axe de sortie (T2).

19. Arrangement de commutateur (1b), **caractérisé par** au moins un commutateur électrique (1) qui est configuré selon l'une des revendications 1 à 17.

20. Arrangement de commutateur (1b) selon la revendication 19, **caractérisé en ce qu'**il existe un sectionneur coudé (7) en forme de T selon la revendication 18, par le biais duquel deux commutateurs de puissance (2) sont reliés entre eux du côté de l'enveloppe.

21. Arrangement de commutateur (1b) selon l'une des revendications 19-20, **caractérisé en ce que**
a) trois commutateurs (1) sont reliés entre eux par le biais de sectionneurs coudés (7) selon une disposition en 1½ commutateur et
b) notamment que les commutateurs (1) sont disposés dans le sens horizontal et parallèlement les uns aux autres.

22. Arrangement de commutateur (1b) selon la revendication 21, **caractérisé en ce que**
a) le commutateur central (1) est relié par le biais des sectionneurs coudés (7) au niveau de deux bornes électriques (3b, 3d) horizontales côté enveloppe décalées l'une par rapport à l'autre dans le sens axial avec les deux autres commutateurs (1) et
b) les sectionneurs coudés (7) présentent la forme d'un T à angles droits et sont reliés le long de leur axe d'entrée (T1) avec les autres commutateurs (1) et, le long de leur axe de sortie (T2), sont respectivement reliés avec un départ (4 ; 40, 42), notamment un passage à l'air libre (4, 40) vers le haut ou avec un départ de câble (4, 42) vers le bas.

23. Arrangement de commutateur (1b) selon l'une des revendications 21-22, **caractérisé en ce que**
a) au moins l'un des sectionneurs coudés (7) est relié, directement et sans utiliser de composants intermédiaires, avec les autres commutateurs (1) le long de son axe d'entrée (T1) et avec le départ (4 ; 40, 42) le long de son axe de sortie (T2) et/ou
b) au moins l'un des sectionneurs coudés (7) est relié des deux côtés le long de son axe d'entrée (T1), à chaque fois par le biais d'un sectionneur coudé (7) supplémentaire, avec les autres commutateurs (1).

24. Arrangement de commutateur (1b) selon la revendication 21, **caractérisé en ce que**
a) le commutateur central (1) est relié par le biais des sectionneurs coudés (7) au niveau de deux bornes électriques (3a) verticales côté enveloppe décalées l'une par rapport à l'autre dans le sens axial avec les deux autres commutateurs (1) et
b) les sectionneurs coudés (7) présentent la forme d'un T à angles droits et sont reliés le long de leur axe d'entrée (T1), à chaque fois par le biais d'un sectionneur coudé (7) supplémentaire, avec les autres commutateurs (1) et, le long de leur axe de sortie (T2), à chaque fois avec un départ (4 ; 40, 42) vers le haut ou vers le bas.

25. Arrangement de commutateur (1b) selon l'une des revendications 19-24, **caractérisé en ce que**
a) tous les sectionneurs (7) de l'arrangement de commutateur (1b) sont les sectionneurs coudés (7) ayant les caractéristiques caractérisantes selon la revendication 16 et
b) ils présentent la première ouverture de sectionneur (12) le long de leur axe d'entrée (T1) et la deuxième ouverture de sectionneur (13) le long de leur axe de sortie (T2) et, en cas de besoin, une troisième ouverture de sectionneur (14) à l'opposé de la première ouverture de sectionneur (14).
